# EUROPEAN PATENT APPLICATION

(11) **EP 4 190 758 A1**
(43) Date of publication of application: **07.06.2023**
(21) Application number: 21888230.6
(22) Date of filing: 11.08.2021
(51) Int. Cl.: C04B 7/42, C04B 7/36, C04B 7/44, C04B 7/47

(54) **METHOD FOR REGULATING ALITE CRYSTAL STRUCTURE IN CEMENT CLINKER**

(30) Priority: 06.11.2020 CN 202011228814
(71) Applicant: Nanjing Tech University, Nanjing Jiangsu 210000 (CN); Jiangsu Ruiying Advanced Materials Technology Development Co., Ltd, Suqian, Jiangsu 210000 (CN)
(72) Inventor: ZHOU, Hao, Nanjing, Jiangsu 210000 (CN); LI, Xiaodong, Nanjing, Jiangsu 210000 (CN); SHI, Chaoqi, Nanjing, Jiangsu 210000 (CN); SHEN, Xiaodong, Nanjing, Jiangsu 210000 (CN); WANG, Qianqian, Nanjing, Jiangsu 210000 (CN); YU, Zhuqing, Nanjing, Jiangsu 210000 (CN)
(74) Representative: HGF
(86) International application number: PCT/CN2021/112008
(87) International publication number: WO 2022/095531

(57) **Abstract**

Disclosed is a method for regulating an alite crystal structure in a cement clinker. In a preparation process of a portland cement raw meal, a magnesium element and a sulfur element are simultaneously introduced, and M3-type alite in the clinker is completely converted into M1-type alite under the joint action of the magnesium element and the sulfur element. Raw materials used in the method for regulating the crystal structure in the invention are easily available, and the method is simple and easy to operate, and has high universality. Desulfurized gypsum, phospho gypsum and the like can be used as sources of sulfur in actual production, so that a comprehensive utilization value of an industrial by-product is increased. Magnesium can be derived from low-quality limestone, and no additional ingredient components need to be added, so that not only convenient operation is realized, but also the use of the low-quality limestone is increased, thus reducing production costs. After being regulated by the method, the alite crystal structure in the portland cement clinker can be completely converted from M3-type or M1/M3 hybrid type into M1-type.

## Description

### TECHNICAL FIELD

The present invention belongs to the technical field of civil engineering materials, and relates to a method for regulating an alite crystal structure in cement clinker.

### BACKGROUND

The cement industry in China has developed rapidly. In 2019, the cement output in China was nearly 2.33 billion tons, with a year-on-year growth of 6.1%, accounting for more than 50% of the total output of cement in the world, and ranking first in the world. Although China is a big country for cement production, but not a strong country, and the overall quality of cement is not high, which affects the service life of the concrete engineering in China. Therefore, it is necessary to improve performances of the produced cement, portland cement, as a cement variety with the largest output, the largest use amount and the widest use range, is mainly composed of a portland cement clinker, gypsum and a mixed material. Improving performance of the portland cement mainly lies in improving performances of the portland cement clinker. Main minerals in the portland cement clinker are alite (3CaO·SiO₂, C₃S), belite (2CaO·SiO₂, C₂S), tricalcium aluminate (3CaO·Al₂O₃, C₃A) and tetracalcium aluminoferrite (4CaO·3Al₂O₃·Fe₂O₃, C₄AF). The alite is a main supplier of properties and strength of the portland cement clinker, and is also a main consumer of energy in portland cement production at the same time. Alite crystal structures in the portland cement clinker are mainly M1-type and M3-type, and the alite crystal structures in the portland cement clinker produced by cement enterprises are mostly the M3-type. Experts and scholars at home and abroad have found that the hydration activity of the M1-type alite is higher than that of the M3-type alite, and the strength of the M1-type alite is also about 10% higher than that of the M3-type alite. Ion regulation on main mineral phases of the portland cement clinker is widely researched by experts and scholars at home and abroad as a technology which is simple to operate and easy to industrially apply since the 21^{st} century. However, a stable regulation process which can be applied to the production process of the portland cement clinker and regulates an M3-type alite crystal structure into an M1-type by doping some trace elements still leaves a blank in theoretical research and actual production.

### SUMMARY

Object of the present invention: the technical problem to be solved by the present invention is to provide a crystal structure regulation process capable of stably regulating M3-type alite in a portland cement clinker into M1-type alite from a point of view of ion regulation aiming at the defects in the prior art, through which a portland cement clinker with a higher M1-type alite content may be calcined stably.

To implement the foregoing object, the technical solutions employed by the present invention are as follows.

A method for regulating an alite crystal structure in a cement clinker is provided, wherein in a preparation process of a portland cement raw meal, a magnesium element and a sulfur element are simultaneously introduced, and M3-type alite in the clinker is completely converted into M1-type alite under the joint action of the magnesium element and the sulfur element.

Specifically, the method comprises the following steps of:
(1) determining proportions of raw meal components according to a composition of the portland cement clinker, wherein the raw meal components comprise at least one magnesium-containing raw material and at least one sulfur-containing raw material, ensuring that, in the clinker, a content of the magnesium element is calculated in terms of MgO, with a mass percentage of 0.5% to 5%, and a content of the sulfur element is calculated in terms of SO₃, with a mass percentage of 0.36% to 2.94%; and
(2) calcining the prepared raw meal to obtain the portland cement clinker.

Preferably, in the step (1), the content of the magnesium element is calculated by MgO, the content of the sulfur element is calculated by SO₃, and a mass ratio of MgO to SO₃ ranges from 1.2 to 1.7.

Preferably, in the step (1), the content of the magnesium element is calculated in term of MgO, with the mass percentage of 1.5% to 3.0%; and the content of the sulfur element is calculated in term of SO₃, with the mass percentage of 1.09% to 2.18%.

Specifically, in the step (2), in a calcining stage, the temperature is raised to 1,400°C to 1,500°C at 5°C/min to 35°C/min, maintained for 30 minutes to 60 minutes, and then cooled to room temperature at a cooling rate of 70°C/min to 90°C/min.

Specifically, in the step (2), in the calcining stage, the temperature is raised to 1,500°C at 10°C/min, maintained for 60 minutes, and then cooled to room temperature at the cooling rate of 60°C/min.

According to the present invention, Mg²⁺ enters the alite to mainly replace a position of Ca²⁺, and in the portland cement clinker, Mg²⁺ mainly stabilizes the M3-type alite; and S⁶⁺ mainly replaces a position of Si⁴⁺ in the alite, and one Ca²⁺ is squeezed out of the structure at the same time, thus reducing a structural symmetry, and through the joint action of Mg²⁺ and S⁶⁺, the M3-type alite with a higher symmetry can be converted into the M1-type alite with a lower symmetry.

Preferably, the sulfur-containing raw material comprises, but is not limited to, natural gypsum, desulfurized gypsum, phospho gypsum and the like. Different from SO₃ in coal ash generated by burning a fossil fuel (which is mainly coal) entering the clinker, extra added SO₃ will participate in a solid-phase reaction of the portland cement clinker and enter the alite crystal structure, while SO₃ in the coal ash mainly indwells in a cement rotary kiln as SO₂ atmosphere, or indwells in kiln coating and free state in a form of CaSO₄, so that SO₃ in the coal ash will not participate in the solid-phase reaction of the portland cement clinker.

Preferably, the magnesium-containing raw material comprises, but is not limited to, a magnesium-containing limestone, a magnesium-containing dolomite, MgO and the like. The limestone is an important raw material for preparing the portland cement clinker, and is accompanied by a certain amount of MgO, which is also a main source of MgO in the portland cement clinker, so that MgO in the limestone will participate in the solid-phase reaction of clinker calcination. Therefore, it is unnecessary to add additional MgO or a small amount of MgO by considering a content of MgO in calculation of ingredients.

Beneficial effects:
1. According to the present invention, aiming at the alite which is main strength provider of the cement clinker, the alite is stabilized to be the M1-type with a higher activity at room temperature by introducing regulation components into a complex multi-component system clinker. In a clinker system with typical composition, a plurality of ions such as Na⁺, K⁺, Mg²⁺,Al³⁺, Fe³⁺ and the like are inevitably dissolved in the alite at the same time, and the crystal structure of the alite is mainly the M3-type. According to the present invention, the common M3-type alite in the portland cement clinker can be regulated into the M1-type alite by regulating the content of Mg in the clinker and additionally introducing a certain content of sulfur into the clinker.
2. Raw materials used in the method for regulating the crystal structure in the present invention are easily available, and the method is simple and easy to operate, and has high universality. Desulfurized gypsum, phospho gypsum and the like may be used as sources of sulfur in actual production, so that a comprehensive utilization value of an industrial by-product is increased. The magnesium can be derived from the limestone, and no additional ingredient components need to be added, so that convenient operation is realized, and the production costs will not be increased. After being regulated by the method, the alite crystal structure in the portland cement clinker can be completely converted from M3-type or M1/M3 hybrid type into M1-type.

### BRIEF DESCRIPTION OF THE DRAWINGS

The advantages of the above and/or other aspects of the present invention will become more apparent by further explaining the present invention with reference to the following drawings and detailed description.
FIG. 1a shows X-ray diffraction spectra of Embodiment 1 and Comparative Examples A1, B and C.
FIG. 1b shows X-ray characteristic diffraction area spectra of alite in Embodiment 1 and Comparative Examples A1, B and C.
FIG. 2a shows results of mineral phase content obtained by Rietveld full-spectrum fitting calculation of Comparative Example A1.
FIG. 2b shows results of mineral phase content obtained by Rietveld full-spectrum fitting calculation of Comparative Example B.
FIG. 2c shows results of mineral phase content obtained by Rietveld full-spectrum fitting calculation of Comparative Example C.
FIG. 2d shows results of mineral phase content obtained by Rietveld full-spectrum fitting calculation of Embodiment 1.
FIG. 3a shows X-ray diffraction spectra of Embodiment 2 and Comparative Examples A2, D and E.
FIG. 3b shows X-ray characteristic diffraction area spectra of alite in Embodiment 2 and Comparative Examples A2, D and E.
FIG. 4a shows results of mineral phase content obtained by Rietveld full-spectrum fitting calculation of Comparative Example A2.
FIG. 4b shows results of mineral phase content obtained by Rietveld full-spectrum fitting calculation of Comparative Example D.
FIG. 4c shows results of mineral phase content obtained by Rietveld full-spectrum fitting calculation of Comparative Example E.
FIG. 4d shows results of mineral phase content obtained by Rietveld full-spectrum fitting calculation of Embodiment 2.
FIG. 5a shows X-ray diffraction spectra of Embodiment 3 and Comparative Examples A3, F and G.
FIG. 5b shows X-ray characteristic diffraction area spectra of alite in Embodiment 3 and Comparative Examples A3, F and G.
FIG. 6a shows results of mineral phase content obtained by Rietveld full-spectrum fitting calculation of Comparative Example A3.
FIG. 6b shows results of mineral phase content obtained by Rietveld full-spectrum fitting calculation of Comparative Example F.
FIG. 6c shows results of mineral phase content obtained by Rietveld full-spectrum fitting calculation of Comparative Example G.
FIG. 6d shows results of mineral phase content obtained by Rietveld full-spectrum fitting calculation of Embodiment 3.
FIG. 7a shows X-ray diffraction spectra of Embodiment 4 and Comparative Examples A4, H and I.
FIG. 7b shows X-ray characteristic diffraction area spectra of alite in Embodiment 4 and Comparative Examples A4, H and I.
FIG. 8a shows results of mineral phase content obtained by Rietveld full-spectrum fitting calculation of Comparative Example A4.
FIG. 8b shows results of mineral phase content obtained by Rietveld full-spectrum fitting calculation of Comparative Example H.
FIG. 8c shows results of mineral phase content obtained by Rietveld full-spectrum fitting calculation of Comparative Example I.
FIG. 8d shows results of mineral phase content obtained by Rietveld full-spectrum fitting calculation of Embodiment 4.

### DETAILED DESCRIPTION

The present invention can be better understood from the following embodiments.

In the following embodiments, testing methods adopted comprise that:
XRD data are sampled by a Thermal fisher ARL 9900 X-ray diffraction analyzer (Co target) and a Rigaku MiniFlex 600 X-ray diffraction analyzer (Cu target).

Contents of minerals in a clinker are obtained by XRD full-spectrum fitting, and calculation is realized by a GSAS EXGUI software package based on a Rietveld method.

### Embodiment 1

Analytically pure CaCO₃, SiO₂, Al₂O₃, Fe₂O₃ and MgO, and desulfurized gypsum were used to prepare a raw meal, a mineral composition of a clinker was designed to sequentially comprise 63.42% of C₃S, 17.70% of C₂S, 8.6% of C₃A and 10.28% of C₄AF, and ratio values of the clinker were designed to be that KH=0.91, SM=2.60 and IM=1.60. In Embodiment 1, a content of MgO in the clinker was 0.5%, SO₃ was added in a form of desulfurized gypsum, and a content of SO₃ in the clinker was 0.36%. In Comparative Example A1, the clinker did not contain magnesium and sulfur, in Comparative Example B, the clinker contained sulfur but did not contain magnesium, and in Comparative Example C, the clinker contained magnesium but did not contain sulfur. The raw meal was blended according to a raw material proportion and mixed evenly, and then the mixed raw meal was calcined. In a calcining stage, the temperature was raised to 1,500°C at 10°C/min, maintained for 1 hour, and then cooled to room temperature (generally 15°C to 40°C) at a cooling rate of 60°C/min. The calcined clinker was ground into powder with a specific surface area of 340 m²/kg to 360 m²/kg, and a chemical composition of the calcined clinker was shown in Table 1.

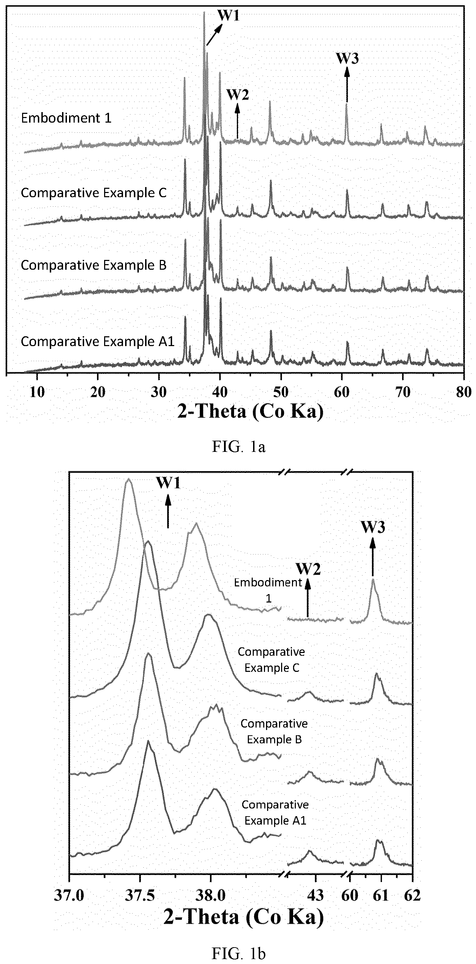

FIG. 1a showed X-ray diffraction spectra of Embodiment 1 and Comparative Examples. It could be found from the figure by comparison that the four X-ray diffraction spectra were basically similar, indicating that compositions of four samples were similar. According to documents, 2θ angle degrees of three regions distinguishing M1 and M3 crystal structures in characteristic diffraction peaks of alite were 37.0° to 38.5°, 42.5° to 43.5° and 60° to 62° (Co target scanning results), or 32.0° to 33.0°, 36.5° to 37.0° and 51.5° to 52.5° (Cu target scanning results) respectively (the same below). FIG. 1b showed spectra of the three regions in the characteristic diffraction peaks of the alite in Embodiment 1 and Comparative Examples under Co target scanning. Combined with W1 and W3 windows, Comparative Example A1 and Comparative Example B had typical M3-type alite characteristics, and Comparative Example C had no obvious peak splitting in the W3 window, indicating that Comparative Example C had a M1/M3 hybrid type alite crystal form. However, the W3 window of Embodiment 1 obviously formed one single peak, indicating that the alite was completely M1-type. A height of the diffraction peak in the W2 window determined a quantity of the M3-type alite. When the W2 window did not have a diffraction peak, it was indicated that the sample was the M1-type alite. As could be seen from the W2 window in FIG. 1b, the diffraction peaks of Comparative Example A1 and Comparative Example B were high, and the diffraction peak of Comparative Example C was lower than those of the former two comparative examples, indicating that the alite crystal structure already contained the M1-type alite, while the W2 window of Embodiment 1 did not have a diffraction peak, and the alite crystal structure thereof was M1-type.

**Table 1 Chemical composition of clinker**

| **Embodiment** | **Mass percentage wt/%** | | | | | |
|---|---|---|---|---|---|---|
| | **SiO₂** | **Al₂O₃** | **Fe₂O₃** | **CaO** | **MgO** | **SO₃** |
| **Comparative Example A1** | 22.86 | 5.41 | 3.38 | 68.35 | 0.00 | 0.00 |
| **Comparative Example B** | 22.74 | 5.38 | 3.36 | 68.01 | 0.00 | 0.36 |
| **Comparative Example C** | 22.72 | 5.38 | 3.36 | 68.18 | 0.50 | 0.00 |
| **Embodiment 1** | 22.60 | 5.35 | 3.34 | 67.85 | 0.50 | 0.36 |

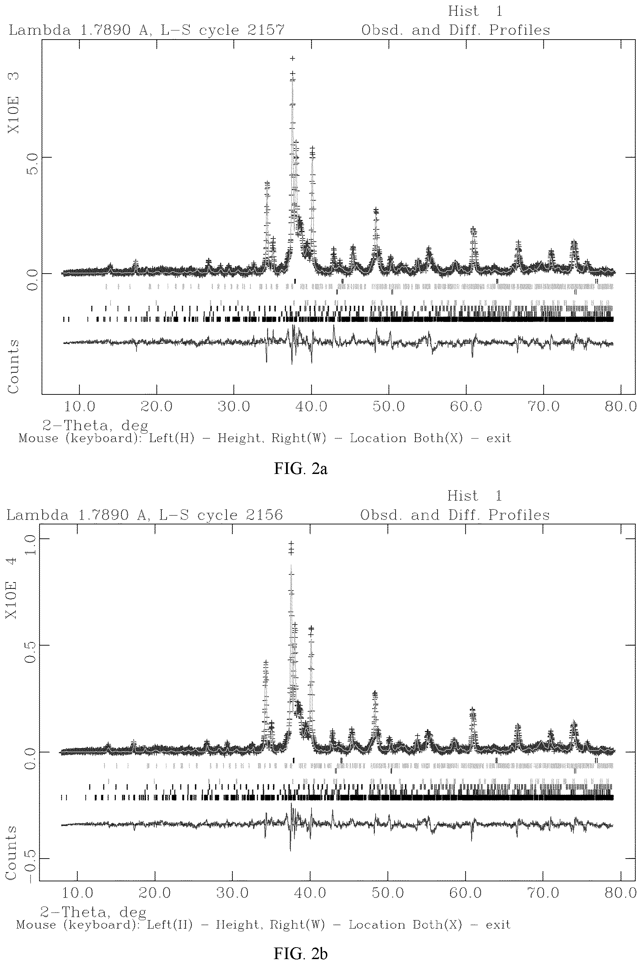

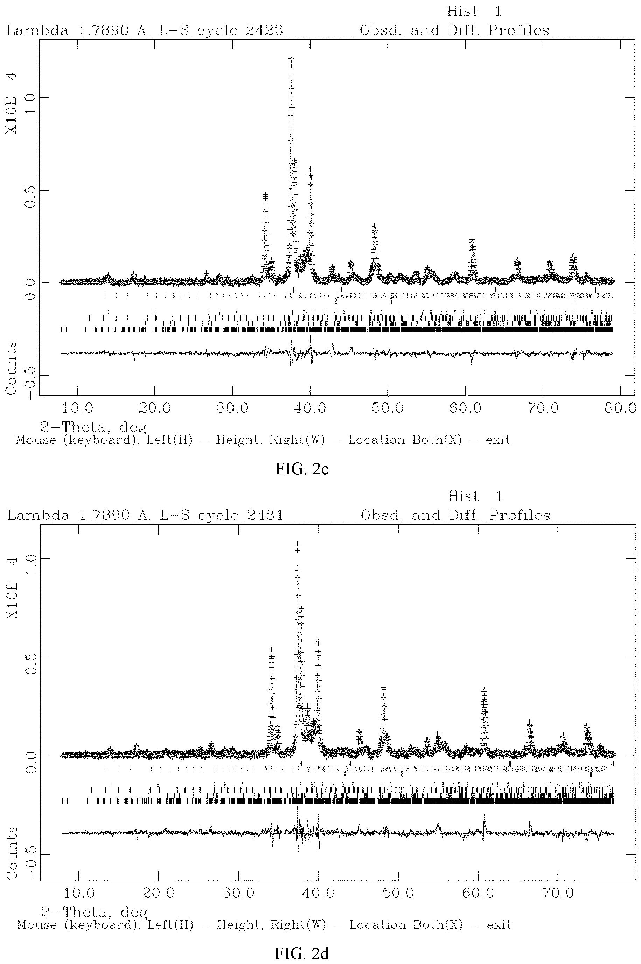

FIG. 2a to FIG. 2d showed fitting graphs obtained by Rietveld full-spectrum fitting calculation of Comparative Examples and Embodiment 1. Fitting results were shown in Table 2. The alite crystal structures in Comparative Example A1 and Comparative Example B were all M3-type, and the alite crystal structure in Comparative Example C was M1/M3 hybrid type, which accounted for 19.12% and 42.86% respectively. This was because only magnesium was doped in Comparative Example C, and a content of magnesium was only 0.5%. This part of MgO would be partially dissolved into alite during calcination, which caused partial crystal lattice distortion of alite. Therefore, a phenomenon that the M1-type alite and the M3-type alite were mixed occurred in Comparative Example C. Meanwhile, no magnesium and sulfur were doped in Comparative Example A1, and the alite structure thereof was also M3-type, which could also support a view that a part of magnesium was dissolved into alite to partially convert the structure in Comparative Example C. This was consistent with a conclusion mentioned in the paper (Segata, M. et al, The effects of MgO, Na₂O and SO₃ on industrial clinkering process: phase composition, polymorphism, microstructure and hydration, using a multidisciplinary approach, Materials Characterization, 155(2019) 109809-109822.) published by Segata et al. that the alite crystal structure in the clinker was M1/M3 hybrid type when 0.77% MgO was doped. The alite crystal structures in Embodiment 1 were all M1-type, and a content of C₃S was the highest among all samples.

**Table 2 Mineral phase composition of clinker**

| **Embodiment** | **C₃S** | | **C₂S** | **C₃A** | **CaAF** | **f-CaO** | **f-MgO** | **CaSC₄** |
|---|---|---|---|---|---|---|---|---|
| | **M3-C₃S** | **M1-C₃S** | | | | | | |
| **Comparative Example A1** | 60.42 | 0.04 | 19.76 | 8.60 | 10.28 | 0.90 | 0.00 | 0.00 |
| **Comparative Example B** | 57.96 | 0.01 | 20.66 | 8.80 | 11.47 | 1.10 | 0.00 | 0.00 |
| **Comparative Example C** | 42.86 | 19.12 | 17.89 | 7.40 | 12.23 | 0.50 | 0.00 | 0.00 |
| **Embodiment 1** | 0.05 | 62.37 | 17.70 | 8.00 | 11.58 | 0.30 | 0.00 | 0.00 |

### Embodiment 2

Analytically pure CaCO₃, SiO₂, Al₂O₃, Fe₂O₃ and MgO, and desulfurized gypsum were used to prepare a raw meal, a mineral composition of a clinker was designed to sequentially comprise 63.42% of C₃S, 17.70% of C₂S, 8.6% of C₃A and 10.28% of C₄AF, and ratio values of the clinker were designed to be that KH=0.91, SM=2.60 and IM=1.60. In Embodiment 2, a content of MgO in the clinker was 1.5%, SO₃ was added in a form of desulfurized gypsum, and a content of SO₃ in the clinker was 1.09. In Comparative Example A2, the clinker did not contain magnesium and sulfur, in Comparative Example D, the clinker contained magnesium but did not contain sulfur, and in Comparative Example E, the clinker contained sulfur but did not contain magnesium. The raw meal was blended according to a raw material proportion and mixed evenly, and then the mixed raw meal was calcined. In a calcining stage, the temperature was raised to 1,500°C at 10°C/min, maintained for 1 hour, and then cooled to room temperature (generally 15°C to 40°C) at a cooling rate of 60°C/min. The calcined clinker was ground into powder with a specific surface area of 340 m²/kg to 360 m²/kg, and a chemical composition of the calcined clinker was shown in Table 1.

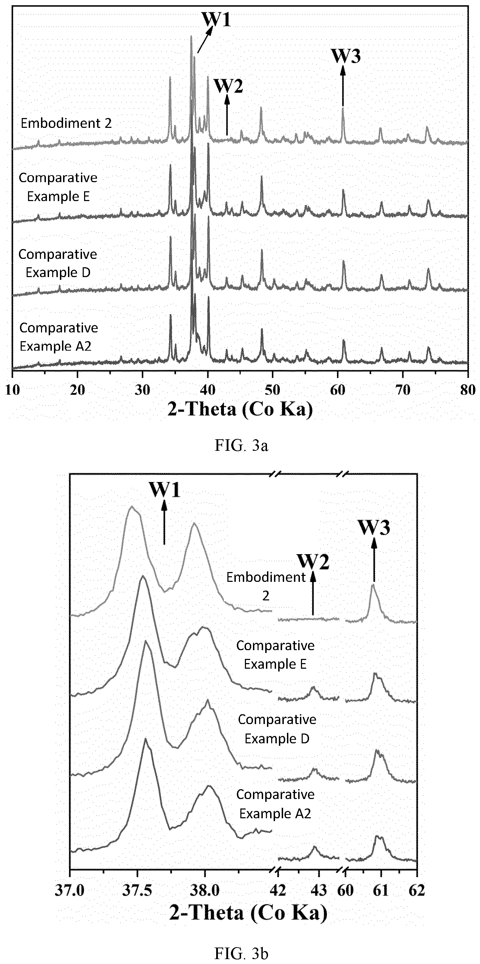

FIG. 3a showed X-ray diffraction spectra of Embodiment 2 and Comparative Examples. It could be found from the figure by comparison that the four X-ray diffraction spectra were basically similar, indicating that compositions of four samples were similar. FIG. 3b showed spectra of three regions in characteristic diffraction peaks of alite in Embodiment 2 and Comparative Examples under Co target scanning (37.0° to 38.5°, 42.5° to 43.5° and 60° to 62°). Combined with W1 and W3 windows, Comparative Example A2, Comparative Example D and Comparative Example E had typical M3-type alite characteristics, and peak splitting occurred in both the W1 window and the W3 window. However, the W3 window of Embodiment 2 obviously formed one single peak, indicating that the alite was completely M1-type. A height of the diffraction peak in the W2 window determined a quantity of the M3-type alite. When the W2 window did not have a diffraction peak, it was indicated that the sample was the M1-type alite. As could be seen from the W2 window in FIG. 3b, the diffraction peaks of Comparative Example A2, Comparative Example D and Comparative Example E were high, indicating that the alite crystal structure was M3-type, while the W2 window of Embodiment 1 did not have a diffraction peak, and the alite crystal structure thereof was M1-type.

**Table 3 Chemical composition of clinker**

| **Embodiment** | **Mass percentage wt/%** | | | | | |
|---|---|---|---|---|---|---|
| | **SiO₂** | **Al₂O₃** | **Fe₂O₃** | **CaO** | **MgO** | **SO₃** |
| **Comparative Example A2** | 22.86 | 5.41 | 3.38 | 68.35 | 0.00 | 0.00 |
| **Comparative Example D** | 22.52 | 5.33 | 3.33 | 67.33 | 1.50 | 0.00 |
| **Comparative Example E** | 22.43 | 5.31 | 3.32 | 67.84 | 0.00 | 1.09 |
| **Embodiment 2** | 22.09 | 5.23 | 3.27 | 66.82 | 1.50 | 1.09 |

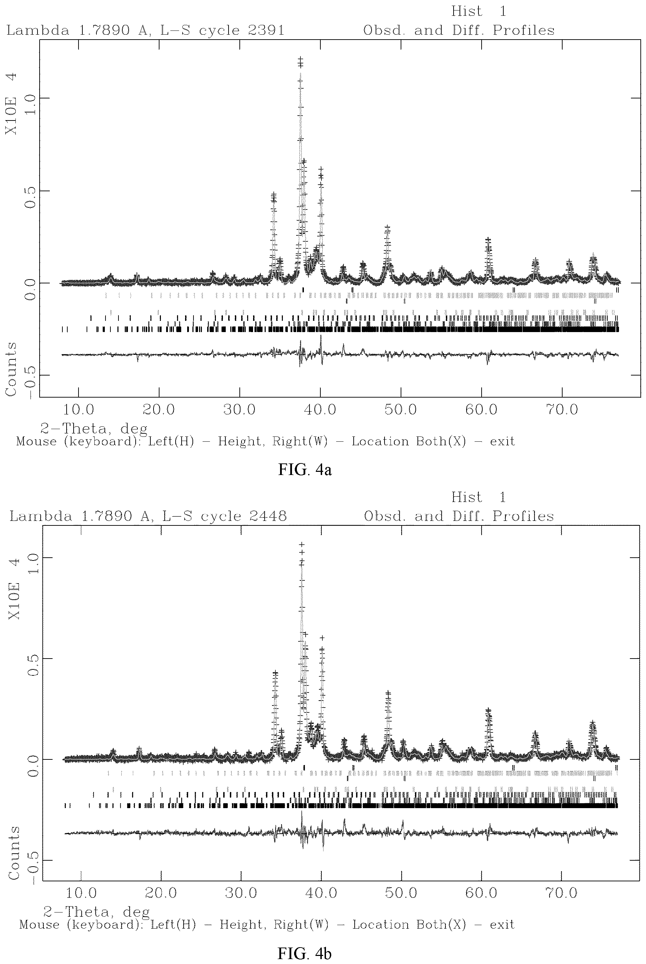

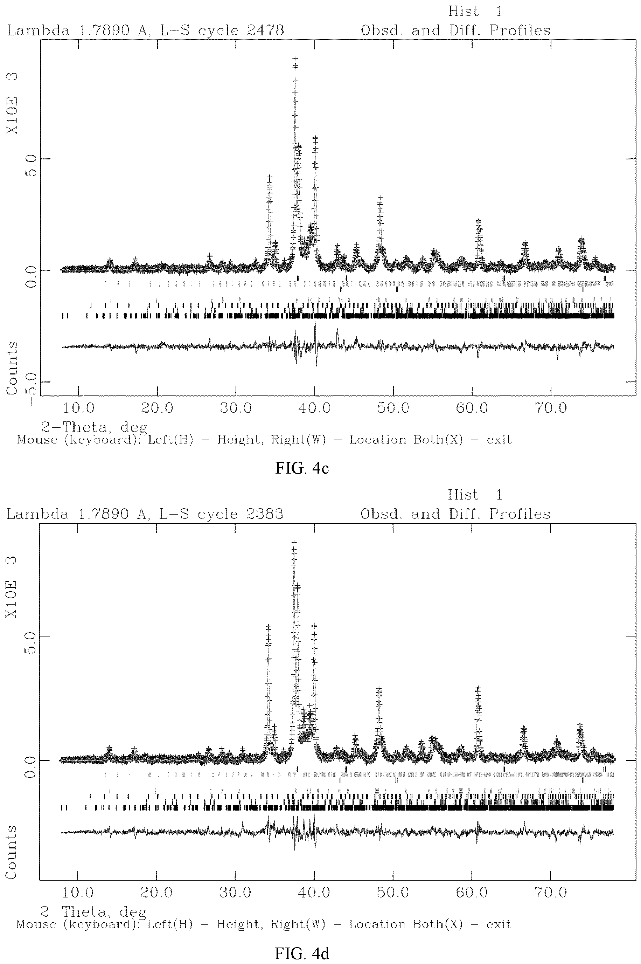

FIG. 4a to FIG. 4d showed fitting graphs obtained by Rietveld full-spectrum fitting calculation of Comparative Examples and Embodiment 2. Fitting results were shown in Table 4. The alite crystal structures in Comparative Example A2, Comparative Example D and Comparative Example E were all M3-type. For Comparative Example D, because an amount of MgO doped already reached 1.5%, a content of MgO entering the alite structure already reached a level of stabilizing the M3-type alite, which was different from a condition that the amount of MgO was not enough to completely stabilize the M3-type alite in Comparative Example C. Therefore, the alite crystal structure in Comparative Example D was M3-type. This was consistent with research results of Xuehong Ren, et al, that when the content of MgO reached 1.1%, the alite crystal structure was M3-type (X.H. Ren, W.S. Zhang, J.Y. Ye, FTIR study on the polymorphic structure of tricalcium silicate, Cement and Concrete Research, 99 (2017) 129-136.). However, for Comparative Example E in which only sulfur was doped, a content of sulfur in a clinker already affected the formation of C₃S, which was not conducive to the calcination of the clinker. The alite crystal structures in Embodiment 2 were all M1-type, and a content of C₃S was the highest among the four samples. It could be seen from this comparison that MgO alone and SO₃ alone had no beneficial effect on the clinker, but after adding MgO and SO₃ in a proper proportion, the calcined clinker was better, which was the function of crystal structure regulation, so that the M3-type alite was converted into the M1-type alite.

**Table 4 Mineral phase composition of clinker**

| **Embodiment** | **C₃S** | | **C₂S** | **C₃A** | **C₄AF** | **f-CaO** | **f-MgO** | **CaSC₄** |
|---|---|---|---|---|---|---|---|---|
| | **M3-C₃S** | **M1-C₃S** | | | | | | |
| **Comparative Example A2** | 60.25 | 0.04 | 19.91 | 8.48 | 10.22 | 1.1 | 0.00 | 0.00 |
| **Comparative Example D** | 61.87 | 0.01 | 19.06 | 7.24 | 12.47 | 0.35 | 0.00 | 0.00 |
| **Comparative Example E** | 52.89 | 0.03 | 24.43 | 9.40 | 11.65 | 1.60 | 0.00 | 0.00 |
| **Embodiment 2** | 0.00 | 63.27 | 17.40 | 7.63 | 11.40 | 0.30 | 0.00 | 0.00 |

### Embodiment 3

Analytically pure CaCO₃, SiO₂, Al2O₃, Fe₂O₃ and MgO, and desulfurized gypsum were used to prepare a raw meal, a mineral composition of a clinker was designed to sequentially comprise 63.42% of C₃S, 17.70% of C₂S, 8.6% of C₃A and 10.28% of C₄AF, and ratio values of the clinker were designed to be that KH=0.91, SM=2.60 and IM=1.60. In Embodiment 3, a content of MgO in the clinker was 3.0%, SO₃ was added in a form of desulfurized gypsum, and a content of SO₃ in the clinker was 2.18%. In Comparative Example A3, the clinker did not contain magnesium and sulfur, in Comparative Example F, the clinker contained magnesium but did not contain sulfur, and in Comparative Example G, the clinker contained sulfur but did not contain magnesium. The raw meal was blended according to a raw material proportion and mixed evenly, and then the mixed raw meal was calcined. In a calcining stage, the temperature was raised to 1,500°C at 10°C/min, maintained for 1 hour, and then cooled to room temperature (generally 15°C to 40°C) at a cooling rate of 60°C/min. The calcined clinker was ground into powder with a specific surface area of 340 m²/kg to 360 m²/kg, and a chemical composition of the calcined clinker was shown in Table 5.

**Table 5 Chemical composition of clinker**

| **Embodiment** | **Mass percentage wt/%** | | | | | |
|---|---|---|---|---|---|---|
| | **SiO₂** | **Al₂O₃** | **Fe₂O₃** | **CaO** | **MgO** | **SO₃** |
| **Comparative Example A3** | 22.86 | 5.41 | 3.38 | 68.35 | 0.00 | 0.00 |
| **Comparative example F** | 22.17 | 5.25 | 3.28 | 66.30 | 3.00 | 0.00 |
| **Comparative example G** | 22.01 | 5.21 | 3.26 | 67.34 | 0.00 | 2.18 |
| **Embodiment 3** | 21.32 | 5.05 | 3.16 | 65.29 | 3.00 | 2.18 |

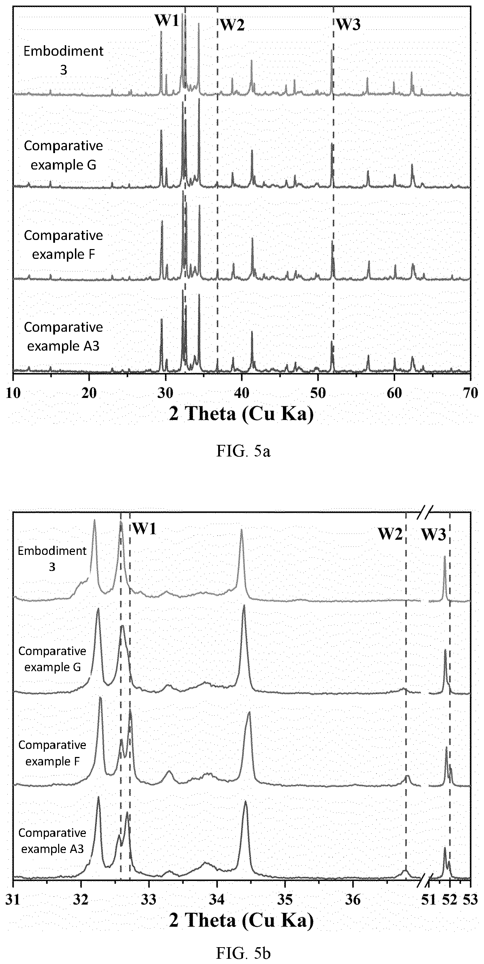

FIG. 5a showed X-ray diffraction spectra of Embodiment 3 and Comparative Examples. It could be found from the figure by comparison that the four X-ray diffraction spectra were basically similar, indicating that compositions of four samples were similar. FIG. 5b showed spectra of three regions in characteristic diffraction peaks of alite in Embodiment 3 and Comparative Examples under Cu target scanning (with Kα2 ray filtered) (32.0° to 33.0°, 36.5° to 37.0° and 51.5° to 52.5°). Combined with W1 and W3 windows, Comparative Example A3 and Comparative Example F had typical M3-type alite characteristics, and although Comparative Example G had obviously reduced peak splitting degree in the W1 window and the W3 window, there was still peak splitting. This condition was mainly caused by a fact that, when only sulfur was doped, the existence of sulfur in an amount exceeding a certain amount would affect a stability of the alite crystal structure. However, the W3 window of Embodiment 3 obviously formed one single peak, indicating that the alite was completely M1-type. A height of the diffraction peak in the W2 window determined a quantity of the M3-type alite. When the W2 window did not have a diffraction peak, it was indicated that the sample was the M1-type alite. As could be seen from the W2 window in FIG. 5b, the diffraction peaks of Comparative Example A3, Comparative Example F and Comparative Example G were high, indicating that the alite crystal structure was M3-type, while the W2 window of Embodiment 3 did not have a diffraction peak, and the alite crystal structure thereof was M1-type.

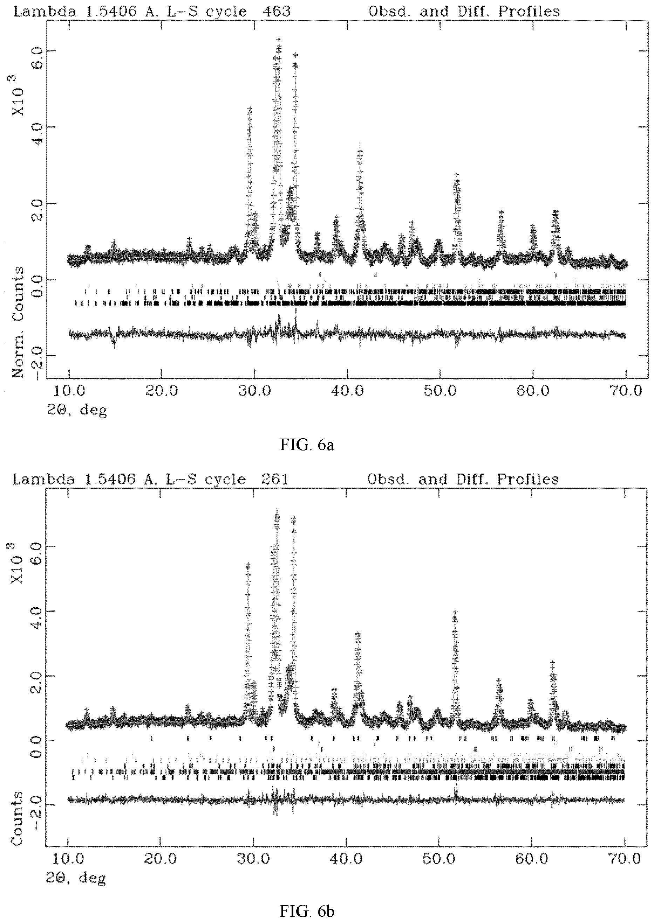

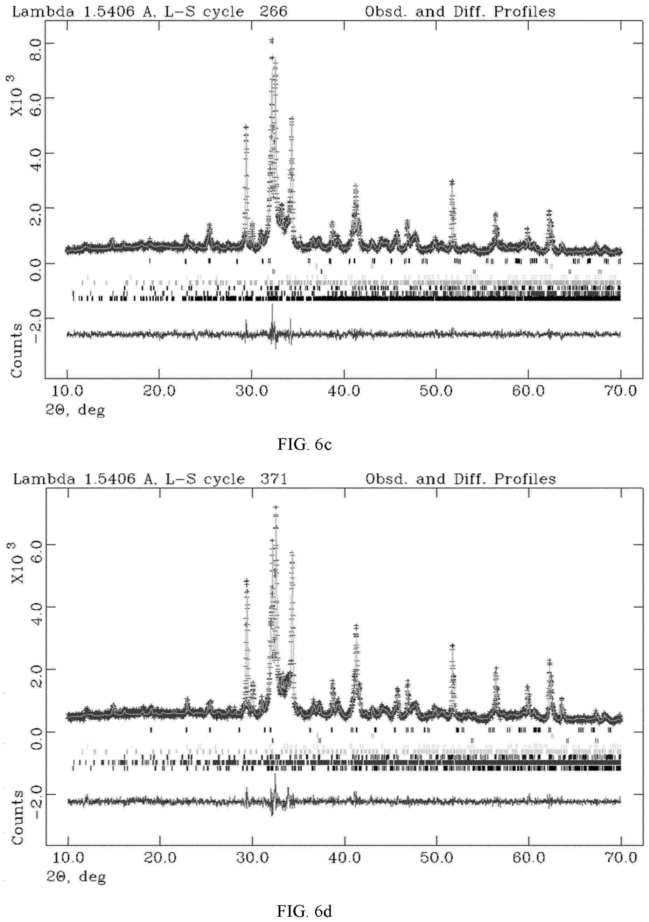

FIG. 6a to FIG. 6d showed fitting graphs obtained by Rietveld full-spectrum fitting calculation of Comparative Examples and Embodiment 3. Fitting results were shown in Table 6. The alite crystal structures in Comparative Example A3, Comparative Example F and Comparative Example G were all M3-type. Compared with Comparative Example E, a content of C₃S in Comparative Example G in which only sulfur was doped was further reduced. The alite crystal structures in Embodiment 3 were all M1-type, and a content of C₃S was the highest among the four samples.

**Table 6 Mineral phase composition of clinker**

| **Embodiment** | **C₃S** | | **C₂S** | **C₃A** | **C₄AF** | **f-CaO** | **f-MgO** | **CaSC₄** |
|---|---|---|---|---|---|---|---|---|
| | **M3-C₃S** | **M1-C₃S** | | | | | | |
| **Comparative Example A3** | 60.36 | 0.02 | 19.85 | 8.55 | 10.30 | 0.92 | 0.00 | 0.00 |
| **Comparative Example F** | 62.10 | 0.02 | 17.56 | 7.04 | 11.57 | 0.15 | 1.56 | 0.00 |
| **Comparative Example G** | 46.14 | 0.01 | 28.78 | 10.29 | 10.88 | 2.46 | 0.00 | 1.44 |
| **Embodiment 3** | 0.02 | 63.36 | 17.22 | 6.68 | 10.28 | 0.26 | 1.52 | 0.66 |

### Embodiment 4

Analytically pure CaCO₃, SiO₂, Al₂O₃, Fe₂O₃ and MgO, and desulfurized gypsum were used to prepare a raw meal, a mineral composition of a clinker was designed to sequentially comprise 63.42% of C₃S, 17.70% of C₂S, 8.6% of C₃A and 10.28% of C₄AF, and ratio values of the clinker were designed to be that KH=0.91, SM=2.60 and IM=1.60. In Embodiment 4, a content of MgO in the clinker was 5.0%, SO₃ was added in a form of desulfurized gypsum, and a content of SO₃ in the clinker was 2.94%. In Comparative Example A4, the clinker did not contain magnesium and sulfur, in Comparative Example H, the clinker contained magnesium but did not contain sulfur, and in Comparative Example I, the clinker contained sulfur but did not contain magnesium. The raw meal was blended according to a raw material proportion and mixed evenly, and then the mixed raw meal was calcined. In a calcining stage, the temperature was raised to 1,500°C at 10°C/min, maintained for 1 hour, and then cooled to room temperature (generally 15°C to 40°C) at a cooling rate of 60°C/min. The calcined clinker was ground into powder with a specific surface area of 340 m²/kg to 360 m²/kg, and a chemical composition of the calcined clinker was shown in Table 7.

**Table 7 Chemical composition of clinker**

| **Embodiment** | **Mass percentage wt/%** | | | | | |
|---|---|---|---|---|---|---|
| | **SiO₂** | **Al₂O₃** | **Fe₂O₃** | **CaO** | **MgO** | **SO₃** |
| **Comparative Example A4** | 22.86 | 5.41 | 3.38 | 68.35 | 0.00 | 0.00 |
| **Comparative example H** | 21.71 | 5.14 | 3.22 | 64.94 | 5.00 | 0.00 |
| **Comparative Example I** | 21.72 | 5.14 | 3.21 | 66.99 | 0.00 | 2.94 |
| **Embodiment 4** | 20.58 | 4.87 | 3.05 | 63.57 | 5.00 | 2.94 |

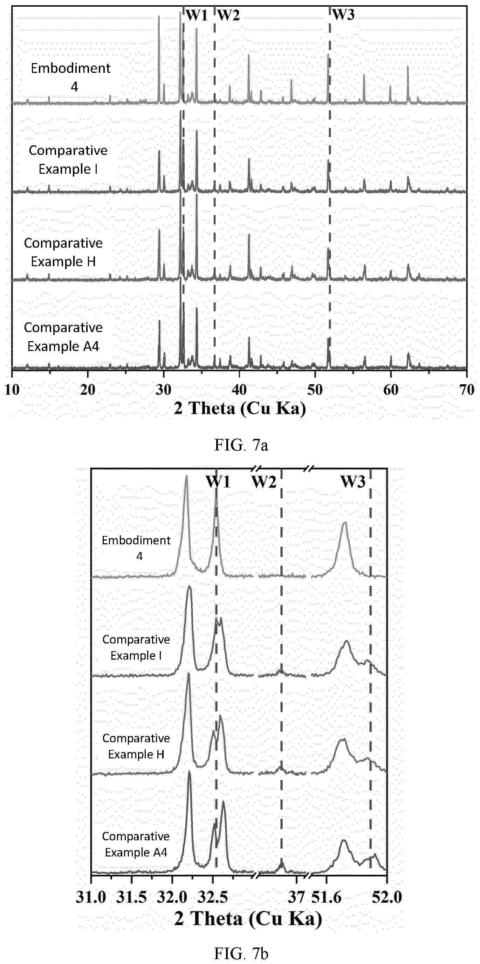

FIG. 7a showed X-ray diffraction spectra of Embodiment 4 and Comparative Examples. It could be found from the figure by comparison that the four X-ray diffraction spectra were basically similar, indicating that compositions of four samples were similar. FIG. 7b showed spectra of three regions in characteristic diffraction peaks of alite in Embodiment 4 and Comparative Examples under CU target scanning (with Kα2 ray filtered) (32.0° to 33.0°, 36.5° to 37.0° and 51.5° to 52.5°). Combined with W1 to W3 windows, Comparative Example A4, Comparative Example H and Comparative Example I had obvious M3-type alite characteristics. However, the W3 window of Embodiment 4 obviously formed one single peak, indicating that the alite was completely M1-type. A height of the diffraction peak in the W2 window determined a quantity of the M3-type alite. When the W2 window did not have a diffraction peak, it was indicated that the sample was the M1-type alite. As could be seen from the W2 window in FIG. 5b, the diffraction peaks of Comparative Example A4, Comparative Example H and Comparative Example I were high, indicating that the alite crystal structure was M3-type, while the W2 window of Embodiment 4 did not have a diffraction peak, and the alite crystal structure thereof was M1-type.

**Table 8 Mineral phase composition of clinker**

| **Embodiment** | **C₃S** | | **C₂S** | **C₃A** | **C₄AF** | **f-CaO** | **f-MgO** | **CaSC₄** |
|---|---|---|---|---|---|---|---|---|
| | **M3-C₃S** | **M1-C₃S** | | | | | | |
| **Comparative Example A4** | 60.31 | 0.03 | 19.82 | 8.71 | 10.19 | 0.94 | 0.00 | 0.00 |
| **Comparative Example H** | 62.66 | 0.01 | 16.67 | 6.98 | 10.06 | 0.10 | 3.52 | 0.00 |
| **Comparative Example I** | 38.14 | 0.03 | 34.49 | 11.06 | 11.23 | 2.70 | 0.00 | 2.35 |
| **Embodiment 4** | 0.03 | 61.54 | 18.58 | 6.36 | 8.13 | 0.19 | 3.50 | 1.67 |

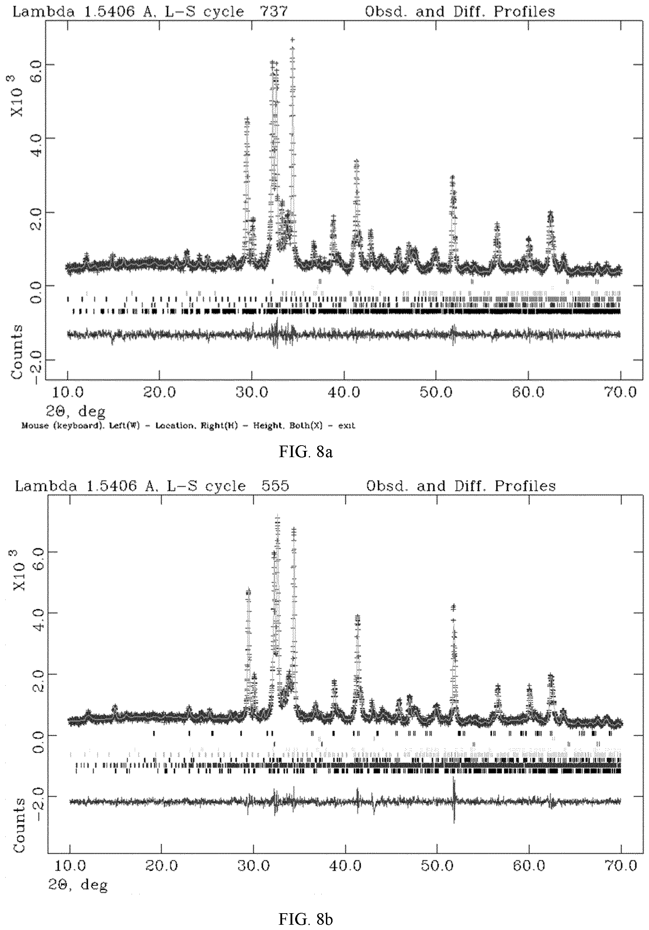

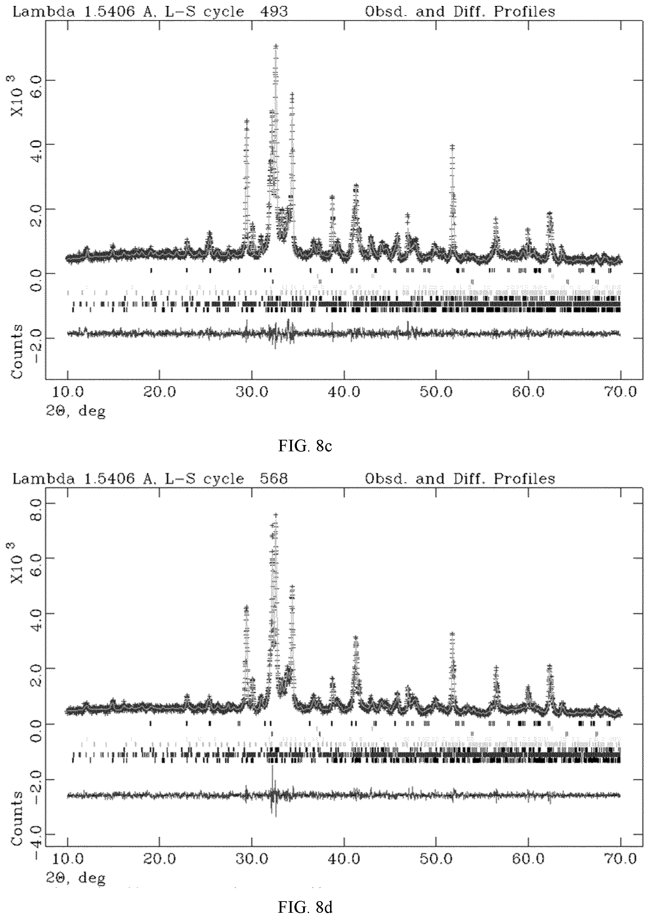

FIG. 8a to FIG. 8d showed fitting graphs obtained by Rietveld full-spectrum fitting calculation of Comparative Examples and Embodiment 4. Fitting results were shown in Table 8. The alite crystal structures in Comparative Example A4, Comparative Example H and Comparative Example I were all M3-type. Compared with Comparative Example G, a content of C₃S in Comparative Example I in which only sulfur was doped was further reduced. The alite crystal structures in Embodiment 4 were all M1-type.

The present invention provides the ideas of the method for regulating the alite crystal structure in the cement clinker. There are many methods and ways to realize the technical solutions. The above is only the preferred embodiments of the present invention. It should be pointed out that those of ordinary skills in the art can make some improvements and embellishments without departing from the principle of the present invention, and these improvements and embellishments should also be regarded as falling with the scope of protection of the present invention. All the unspecified components in the embodiments can be realized by the prior art.

## Claims

1. A method for regulating an alite crystal structure in a cement clinker, wherein in a preparation process of a portland cement raw meal, a magnesium element and a sulfur element are simultaneously introduced, and M3-type alite in the clinker is completely converted into M1-type alite under the joint action of the magnesium element and the sulfur element.

2. The method for regulating the alite crystal structure in the cement clinker according to claim 1, comprising the following steps of:
(1) determining proportions of raw meal components according to a composition of the portland cement clinker, wherein the raw meal components comprise at least one magnesium-containing raw material and at least one sulfur-containing raw material, ensuring that, in the clinker, a content of the magnesium element is calculated in terms of MgO, with a mass percentage of 0.5% to 5%, and a content of the sulfur element is calculated in terms of SO₃, with a mass percentage of 0.36% to 2.94%; and
(2) calcining the prepared raw meal to obtain the portland cement clinker.

3. The method for regulating the alite crystal structure in the cement clinker according to claim 2, wherein in the step (1), the content of the magnesium element is calculated in terms of MgO, the content of the sulfur element is calculated in terms of SO₃, and a mass ratio of MgO to SO₃ ranges from 1.2 to 1.7.

4. The method for regulating the alite crystal structure in the cement clinker according to claim 2 or 3, wherein in the step (1), the content of the magnesium element is calculated in terms of MgO, with the mass percentage of 1.5% to 3.0%; and the content of the sulfur element is calculated in terms of SO₃, with the mass percentage of 1.09% to 2.18%.

5. The method for regulating the alite crystal structure in the cement clinker according to claim 1, wherein the magnesium-containing raw material is any one or a combination of two or more of a magnesium-containing limestone, a magnesium-containing dolomite and MgO.

6. The method for regulating the alite crystal structure in the cement clinker according to claim 1, wherein the sulfur-containing raw material is any one or a combination of two or more of natural gypsum, desulfurized gypsum and phospho gypsum.

7. The method for regulating the alite crystal structure in the cement clinker according to claim 2, wherein in the step (2), in a calcining stage, the temperature is raised to 1,400°C to 1,500°C at 5°C/min to 35°C/min, maintained for 30 minutes to 60 minutes, and then cooled to room temperature at a cooling rate of 50°C/min to 90°C/min.

8. The method for regulating the alite crystal structure in the cement clinker according to claim 7, wherein in the step (2), in the calcining stage, the temperature is raised to 1,500°C at 10°C/min, maintained for 60 minutes, and then cooled to room temperature at the cooling rate of 60°C/min.
